# NEUE EUROPÄISCHE PATENTSCHRIFT

(11) **EP 2 007 974 B2**
(45) Veröffentlichungstag und Bekanntmachung des Hinweises auf die Entscheidung über den Einspruch: **18.11.2020**
(45) Hinweis auf die Patenterteilung: 12.05.2010
(21) Anmeldenummer: 07723946.5
(22) Anmeldetag: 03.04.2007
(51) Int. Cl.: F01N 3/08, F01N 3/20

(54) **SCHALLDÄMPFER FÜR EINE ABGASANLAGE**
MUFFLER FOR AN EXHAUST SYSTEM
SILENCIEUX POUR SYSTÈME DE GAZ D'ÉCHAPPEMENT

(30) Priorität: 13.04.2006 DE 102006017812
(43) Veröffentlichungstag der Anmeldung: 31.12.2008
(73) Patentinhaber: Faurecia Emissions Control Technologies, Germany GmbH, 86154 Augsburg (DE)
(72) Erfinder: TREFZGER, Erik, 86698 Oberndorf (DE)
(74) Vertreter: Prinz & Partner mbB
(86) Internationale Anmeldenummer: PCT/EP2007/003005
(87) Internationale Veröffentlichungsnummer: WO 2007/118609

(56) Entgegenhaltungen:
- DE-A1-102004 054 441
- DE-C1- 10 120 974
- DE-C2- 2 927 758
- DE-U1- 29 804 765
- US-A- 1 995 542
- US-A- 2 343 152
- US-A- 2 520 756
- US-A- 2 573 474
- US-A- 2 940 538
- US-A- 3 340 957
- US-A- 4 111 279
- US-A- 5 926 954

## Beschreibung

Die Erfindung betrifft einen Schalldämpfer für eine Abgasanlage einer Verbrennungs-Kraftmaschine, insbesondere eines KFZ, nach dem Oberbegriff des Anspruchs 1. Solche Schalldämpfer werden bei Kraftfahrzeugen, Luft- und Wasserfahrzeugen eingebaut.

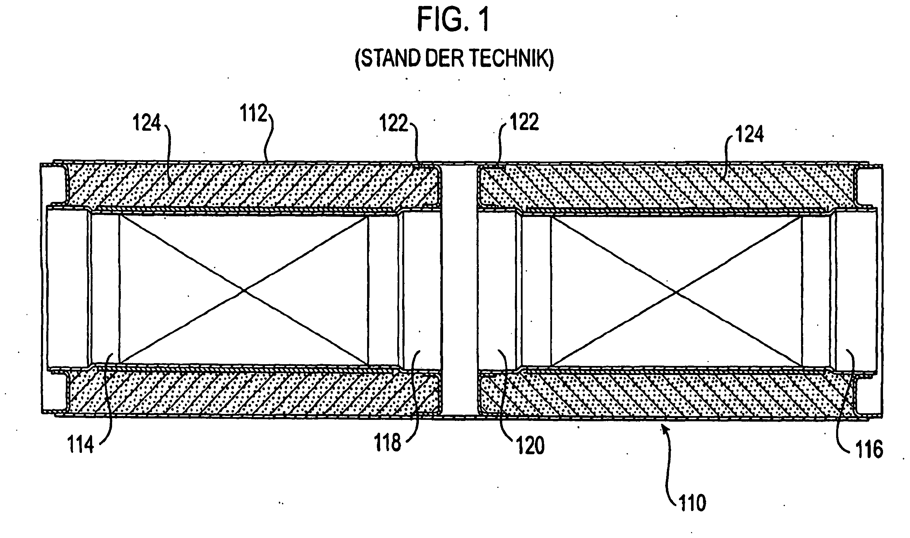

Figur 1 zeigt einen derartigen einfachen Schalldämpfer 110 gemäß dem Stand der Technik. Der Schalldämpfer 110 weist ein Gehäuse 112, ein Einlaßrohr 114 sowie ein Auslaßrohr 116 auf. Zur Halterung der freien Rohrenden 118 bzw. 120 ist je ein ringförmiger Zwischenboden 122 vorgesehen, der am jeweiligen Rohrende 118 bzw. 120 befestigt ist und gegenüber dem Gehäuse 112 einen Schiebesitz aufweist. Nachteilig bei dieser bekannten Ausgestaltung ist, daß sich die Zwischenböden 122 bei temperaturbedingten Ausdehnungen der Rohre 114, 116 verhaken können (Schubladeneffekt). Außerdem können im Bereich zwischen den Zwischenböden 122, in dem kein schalldämpfendes Material 124 angeordnet ist, an der Gehäuseoberfläche überhitzte Stellen auftreten. Zudem kann das Volumen zwischen den Böden 122 nicht zur Geräuschdämpfung genutzt werden. Bei der Herstellung müssen zwei aus dem jeweiligen Rohr 114 bzw. 116 und dem zugeordneten Zwischenboden 122 gebildete Einsätze gehandhabt werden; die jeweiligen Schiebesitze erfordern enge Herstellungstoleranzen.

Die US 2,520,756 zeigt einen gattungsgemäßen Schalldämpfer mit einem Gehäuse, einem Einlass- und einem Auslassrohr, die jeweils ein im Inneren des Gehäuses angeordnetes Rohrende haben, und einem gemeinsamen Zwischenboden zur Halterung der Rohrenden am Gehäuse.

Demgegenüber schafft die Erfindung einen Schalldämpfer, der sich gegenüber dem Stand der Technik durch eine verbesserte Lagerung der Rohrenden im Gehäuse auszeichnet.

Erfindungsgemäß wird durch einen Schalldämpfer nach Anspruch 1 erreicht. Der Zwischenboden erstreckt sich insbesondere senkrecht zur Längsachse des Gehäuses bzw. der Rohre. Die erfindungsgemäße Ausgestaltung zeichnet sich gegenüber dem Stand der Technik durch weniger Bauteile aus, was eine Reduktion sowohl der Produktionskosten als auch des Schalldämpfergewichts bedeutet. Zudem gibt es beim erfindungsgemäßen Schalldämpfer keinen Spalt ohne schalldämpfendes Material, folglich können keine überhitzten Stellen am Gehäuse auftreten. Das Schalldämpfervolumen kann zudem vollständig zur Geräuschdämpfung genutzt werden. Die Haltevorsprünge in Längsrichtung des Schalldämpfers sind federnd ausgebildet, wodurch eine Relativbewegung der Rohrenden zueinander bzw. zum Gehäuse, etwa bedingt durch unterschiedliche thermische Ausdehnung, ermöglicht wird. Hierzu haben die Vorsprünge insbesondere einen sich radial erstreckenden, einseitig befestigten, freikragenden Abschnitt, der federnd nachgiebig gebogen werden kann. Weitere Vorteile dieser Lösung: Ein Verkanten bei thermischer Ausdehnung sowie die damit verbundenen unerwünschten Geräusche werden vermieden.

Der Zwischenboden weist wenigstens zwei Haltevorsprünge auf, die einen sich in entgegengesetzte Richtungen und parallel zur jeweiligen Längsachse der Rohre erstreckenden Abschnitt haben. Dadurch ergibt sich eine besonders einfache Ausgestaltung zur Halterung der beiden Rohrenden, wobei die sich in entgegengesetzte Richtungen erstreckenden Haltevorsprünge den beiden unterschiedlichen Rohrenden zugeordnet sind. Durch die Haltevorsprünge ergibt sich eine größere Anlagefläche zum Rohr hin. Ferner lassen sich Schweißnähte abseits von Biegebeanspruchungszonen in leicht zugängliche Bereiche legen.

Die Rohrenden liegen an den ihnen zugeordneten Vorsprüngen an. Sie sind insbesondere starr mit den Vorsprüngen verbunden, beispielsweise verschweißt oder verlötet.

Gemäß einer bevorzugten Ausführungsform ist der Zwischenboden fest mit dem Gehäuse verbunden. Die erfindungsgemäße Ausgestaltung verzichtet also vollständig auf die aus dem Stand der Technik bekannten Schiebesitze sowie die damit verbundenen Nachteile.

Um ein Ausblasen von Dämmaterial zu verhindern, sind die Rohrenden im Bereich des Zwischenbodens axial zueinander verschieblich ineinander geschoben.

Eine einfache Ausgestaltung ergibt sich, wenn man die Vorsprünge als umgebogene Laschen ausführt.

Bei dem Zwischenboden handelt es sich vorzugsweise um ein Blechstanzteil, welches sehr kostengünstig herstellbar ist.

Die Vorsprünge können gleichmäßig längs des Umfangs der Rohrenden angeordnet sein. Dadurch ergibt sich eine besonders sichere Halterung der Rohre, insbesondere, wenn die in entgegengesetzte Richtungen weisenden Vorsprünge alternierend zueinander angeordnet sind.

Gemäß einer Ausgestaltung ist der Zwischenboden ringförmig und dient zur Halterung eines Einlaßrohrs und eines Auslaßrohrs.

Eine alternative Ausgestaltung des erfindungsgemäßen Schalldämpfers sieht wenigstens zwei Einlaßrohre und ihnen zugeordnete Auslaßrohre vor, deren Rohrenden durch einen gemeinsamen Zwischenboden gehalten sind. Dieser Schalldämpfer zeichnet sich durch besonders wenig Bauteile und damit eine kostengünstige Herstellung aus.

Im Falle eines solchen Schalldämpfers für eine zwei- oder mehrflutige Abgasanlage hat der Zwischenboden vorzugsweise wenigstens zwei im wesentlichen kreisförmige Ausnehmungen, längs deren Umfang jeweils mehrere Haltevorsprünge vorgesehen sind. Dabei dient jede Ausnehmung bzw. die sie umgebenden Vorsprünge zur Halterung eines Einlaßrohrs sowie des zugeordneten Auslaßrohrs.

Weitere Merkmale und Vorteile der Erfindung ergeben sich aus der nachfolgenden Beschreibung zweier bevorzugter Ausführungsformen anhand der beigefügten Zeichnungen. In diesen zeigen:
Figur 1 einen Längsschnitt durch einen Schalldämpfer gemäß dem Stand der Technik;
Figur 2 einen Längsschnitt durch einen Schalldämpfer gemäß einer ersten Ausführungsform der Erfindung;
Figur 3 einen Querschnitt durch den Schalldämpfer aus Figur 2 längs der Linie III-III;
Figur 4 eine Seitenansicht eines Zwischenbodens, der im Schalldämpfer der Figur 2 verwendet wird;
Figur 5 eine Perspektivansicht des Zwischenbodens aus Figur 4;
Figur 6 eine Schnittansicht eines Schalldämpfers gemäß einer zweiten Ausführungsform der Erfindung;
Figur 7 einen Schnitt durch den Schalldämpfer aus Figur 6 längs der Linie VII-VII;
Figur 8 eine Draufsicht auf einen Zwischenboden, der im Schalldämpfer der Figur 6 verwendet wird; und
Figur 9 eine Perspektivansicht des Zwischenbodens aus Figur 8 samt daran angebrachten Rohren.

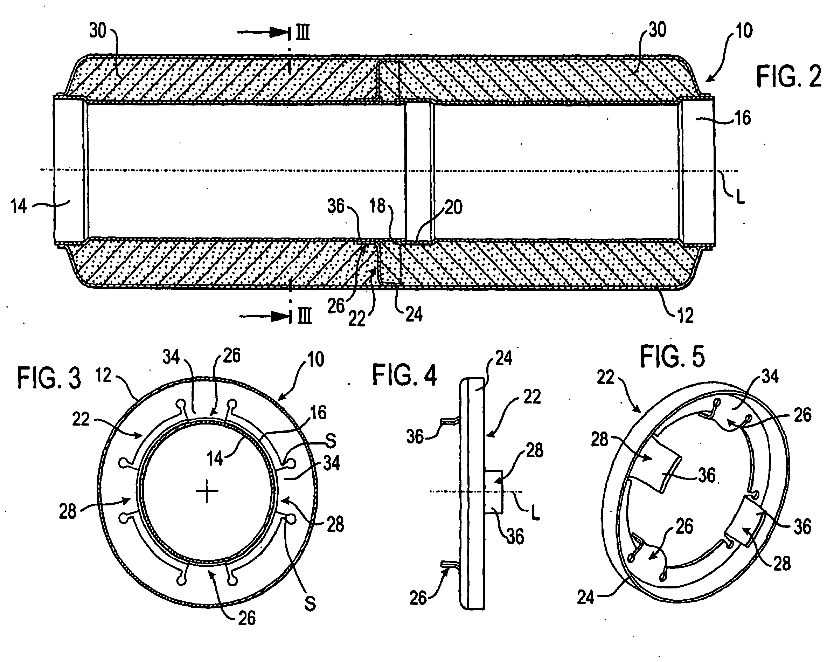

Die Figuren 2 und 3 zeigen einen erfindungsgemäßen Schalldämpfer 10 für eine Abgasanlage einer Verbrennungs-Kraftmaschine, hier eines Kraftfahrzeugs, der ein Gehäuse 12 sowie ein darin angeordnetes Einlaßrohr 14 und ein Auslaßrohr 16 aufweist. Hierbei können natürlich Einlaß- und Auslaßseite vertauscht sein. Sowohl das Einlaßrohr 14 als auch das Auslaßrohr 16 weisen ein im Inneren des Gehäuses 12 angeordnetes Rohrende 18 bzw. 20 auf, wobei im gezeigten Beispiel das Rohrende 18 in das geringfügig aufgeweitete Rohrende 20 eingeschoben ist.

Zur Halterung der beiden Rohrenden 18, 20 ist ein gemeinsamer ringförmiger Zwischenboden 22 vorgesehen, der in den Figuren 4 und 5 separat dargestellt ist. Der Zwischenboden 22 ist z.B. als Blechstanzteil ausgeführt und weist einen umlaufenden umgeformten Rand 24 auf, mit dem der Zwischenboden 22 am Gehäuse 12 anliegt. Bei der gezeigten Ausführungsform ist der Zwischenboden 22 im Bereich des Randes 24 fest mit dem Gehäuse 12 verbunden, z.B. durch Klemmung.

Wie aus den Figuren ersichtlich ist, hat der Zwischenboden 22 mehrere einstückig mit ihm ausgeführte Haltevorsprünge 26, 28 in Form von umgebogenen Laschen, die sich abwechselnd in entgegengesetzte Richtungen und parallel zur gemeinsamen Längsachse L der Rohre 14, 16 erstrecken. Dabei weisen die beiden mit dem Bezugszeichen 26 gekennzeichneten Haltevorsprünge in Richtung des Einlasses und dienen der Halterung des Rohrendes 18, während die mit 28 bezeichneten Haltevorsprünge sich in Richtung des Auslasses erstrecken und das Rohrende 20 halten.

Wie insbesondere den Figuren 4 und 5 zu entnehmen ist, sind die Haltevorsprünge 26, 28 gleichmäßig längs des Umfangs des Zwischenbodens 22 angeordnet, wobei je zwei benachbarte Vorsprünge 26, 28 in entgegengesetzte Richtungen umgebogen sind und je zwei gleichgerichtete Vorsprünge 26 bzw. 28 einander gegenüberliegen.

Die Vorsprünge 26, 28 werden in Axialrichtung gesehen seitlich durch radiale Schlitze S begrenzt.

Die Rohrenden 18, 20 sind innerhalb der Haltevorsprünge 26, 28 angeordnet (bezogen auf die gemeinsame Längsachse L) und sind starr mit diesen verbunden, etwa verschweißt. Die Haltevorsprünge haben jeweils einen radial nach innen verlaufenden, nur außenseitig am Zwischenboden 22 befestigten Abschnitt 34 und einen sich daran anschließenden axialen und zylindrisch geformten Abschnitt 36. Aufgrund dieser insbesondere aus den Figuren 3 und 5 ersichtlichen Ausgestaltung können die Haltevorsprünge 26, 28 axial federn, wodurch die Rohrenden 18, 20 axial zueinander sowie relativ zum Gehäuse 12 verschieblich sind, um im Betrieb auftretende unterschiedliche thermische Ausdehnungen zuzulassen.

Wie im Stand der Technik sind auch bei der erfindungsgemäßen Ausgestaltung die Rohre 14 und 16 von einem schalldämpfenden Material 30 umgeben.

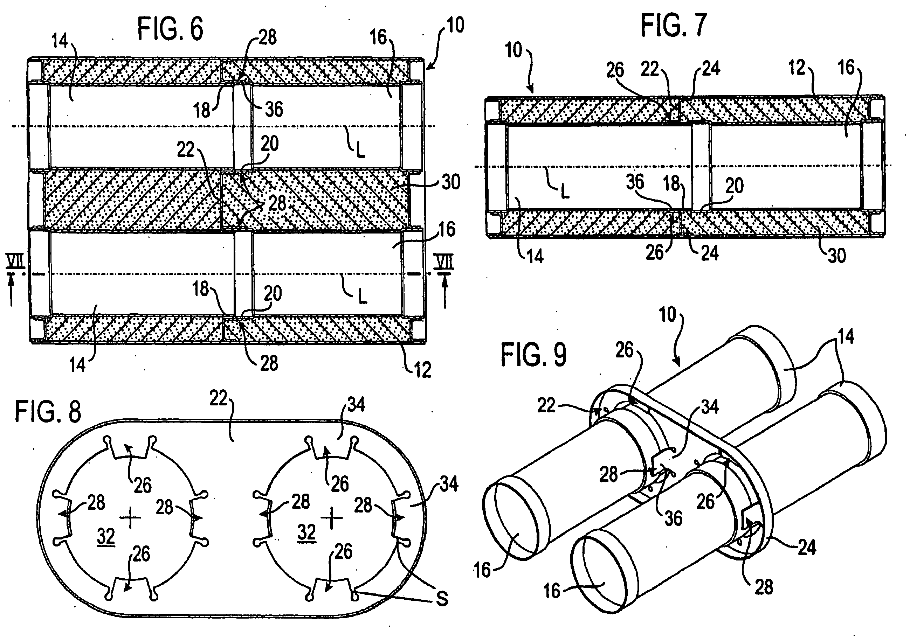

Die Figuren 6 und 7 zeigen einen Schalldämpfer 10 gemäß einer zweiten Ausführungsform der Erfindung, der in einer zweiflutigen Abgasanlage (nicht gezeigt) zum Einsatz kommt. Dabei tragen gleiche oder funktionsgleiche Bauteile gleiche Bezugszeichen, und im folgenden wird nur auf die Unterschiede zum bisher beschriebenen Schalldämpfer eingegangen.

Der Schalldämpfer 10 gemäß den Figuren 6 und 7 weist je zwei Einlaßrohre 14 und ihnen zugeordnete Auslaßrohre 16 auf, die in einem gemeinsamen Gehäuse 12 angeordnet sind. Zur Halterung aller vier Rohrenden 18, 20 dient ein einziger Zwischenboden 22 (siehe auch Figuren 8 und 9), der zwei im wesentlichen kreisförmige Ausnehmungen 32 aufweist, längs deren Umfang die Haltevorsprünge 26, 28 angeordnet sind. Jede Ausnehmung 32 ist einem Einlaßrohr 14 (sowie dem zugehörigen Auslaßrohr 16) zugeordnet.

Für beide beschriebenen Ausführungsformen gilt, daß sich der erfindungsgemäße Schalldämpfer durch eine besonders kostengünstige Herstellung, ein geringes Gewicht sowie eine einfache Fertigung auszeichnet.

Bei sämtlichen Ausführungsformen ist die axiale Erstreckung der abgewinkelten Vorsprünge 26, 28 größer als die radiale Erstreckung (vgl. z.B. Figuren 3 und 5).

## Patentansprüche

1. Schalldämpfer für eine Abgasanlage einer Verbrennungs-Kraftmaschine, mit einem Gehäuse (12), wenigstens einem Einlaß- und wenigstens einem Auslaßrohr (14, 16), die jeweils ein im Inneren des Gehäuses (12) angeordnetes Rohrende (18, 20) haben und einem gemeinsamen Zwischenboden (22) zur Halterung der Rohrenden (18, 20) am Gehäuse (12), **dadurch gekennzeichnet, daß** der Zwischenboden (22) wenigstens zwei federnd ausgebildete Haltevorsprünge (26, 28) aufweist, wobei jeder Haltevorsprung (26, 28) einen sich parallel zur jeweiligen Längsachse (L) der Rohre (14, 16) erstreckenden Abschnitt (36) hat und sich der Abschnitt eines der Haltevorsprünge (26, 28) in eine entgegengesetzte axiale Richtung zum Abschnitt (36) des anderen Haltevorsprungs (26, 28) erstreckt und daß die Rohrenden (18, 20) an den ihnen zugeordneten Haltevorsprüngen (26, 28) anliegen.

2. Schalldämpfer nach einem der vorhergehenden Ansprüche, **dadurch gekennzeichnet, daß** die Rohrenden (18, 20) mit den ihnen zugeordneten Vorsprüngen (26, 28) starr verbunden sind.

3. Schalldämpfer nach einem der vorhergehenden Ansprüche, **dadurch gekennzeichnet, daß** der Zwischenboden (22) fest mit dem Gehäuse (12) verbunden ist.

4. Schalldämpfer nach einem der vorhergehenden Ansprüche, **dadurch gekennzeichnet, daß** die Rohrenden (18, 20) im Bereich des Zwischenbodens (22) axial zueinander verschieblich ineinander geschoben sind.

5. Schalldämpfer nach einem der vorhergehenden Ansprüche, **dadurch gekennzeichnet, daß** die Vorsprünge (26, 28) als umgebogene Laschen ausgeführt sind.

6. Schalldämpfer nach einem der vorhergehenden Ansprüche, **dadurch gekennzeichnet, daß** der Zwischenboden (22) als Blechstanzteil ausgeführt ist.

7. Schalldämpfer nach einem der vorhergehenden Ansprüche, dadujrch gekennzeichnet, daß die Vorsprünge (26) gleichmäßig längs des Umfangs der Rohrenden (18, 20) angeordnet sind.

8. Schalldämpfer nach einem der vorhergehenden Ansprüche, **dadurch gekennzeichnet, daß** der Zwischenboden (22) ringförmig ist.

9. Schalldämpfer nach einem der Ansprüche 1 bis 7, **dadurch gekennzeichnet, daß** wenigstens zwei Einlaßrohre (14) und ihnen zugeordnete Auslaßrohre (16) vorgesehen sind, deren Rohrenden (18, 20) durch einen gemeinsamen Zwischenboden (22) gehalten sind.

10. Schalldämpfer nach Anspruch 9, **dadurch gekennzeichnet, daß** der Zwischenboden (22) wenigstens zwei im wesentlichen kreisförmige Ausnehmungen (32) aufweist, längs deren Umfang jeweils mehrere Haltevorsprünge (26, 28) vorgesehen sind.

## Claims

1. A muffler for an exhaust system of a combustion engine, comprising a housing (12), at least one inlet pipe and at least one outlet pipe (14, 16) each having a pipe end (18, 20) arranged inside the housing (12), and a common intermediate bottom (22) for holding the pipe ends (18, 20) on the housing (12), **characterized in that** the intermediate bottom (22) includes at least two holding projections (26, 28) that are configured so as to be resilient, each holding projection (26, 28) having a portion (36) extending parallel to the respective longitudinal axis (L) of the pipes (14, 16), and the portion of one of the holding projections (26, 28) extending in an opposite axial direction to the portion (36) of the other holding projection (26, 28), and **in that** the pipe ends (18, 20) rest against the holding projections (26, 28) associated therewith.

2. The muffler according to any of the preceding claims, **characterized in that** the pipe ends (18, 20) are rigidly connected with the projections (26, 28) associated therewith.

3. The muffler according to any of the preceding claims, **characterized in that** the intermediate bottom (22) is firmly connected with the housing (12).

4. The muffler according to any of the preceding claims, **characterized in that** in the region of the intermediate bottom (22), the pipe ends (18, 20) are pushed into each other so as to be axially displaceable to each other.

5. The muffler according to any of the preceding claims, **characterized in that** the projections (26, 28) are configured as bent tongues.

6. The muffler according to any of the preceding claims, **characterized in that** the intermediate bottom (22) is configured as a stamped sheet metal component.

7. The muffler according to any of the preceding claims, **characterized in that** the projections (26) are arranged uniformly along the circumference of the pipe ends (18, 20).

8. The muffler according to any of the preceding claims, **characterized in that** the intermediate bottom (22) is annular.

9. The muffler according to any of claims 1 to 7, **characterized in that** at least two inlet pipes (14) and outlet pipes (16) associated therewith are provided the pipe ends (18, 20) of which are held by a common intermediate bottom (22).

10. The muffler according to claim 9, **characterized in that** the intermediate bottom (22) has at least two substantially circular recesses (32), several holding projections (26, 28) being respectively provided along the circumference of the recesses.

## Revendications

1. Silencieux pour un système d'échappement d'une machine à combustion interne, comportant un boîtier (12), au moins un tube d'admission et au moins un tube de sortie (14, 16) qui présentent chacun une extrémité de tube (18, 20) agencée à l'intérieur du boîtier (12) ainsi qu'un fond intermédiaire commun (22) pour le maintien des extrémités de tube (18, 20) sur le boîtier (12), **caractérisé en ce que** le fond intermédiaire (22) présente au moins deux saillies de maintien (26, 28) réalisées de manière à être élastiques, chaque saillie de maintien (26, 28) présentant un tronçon (36) s'étendant de manière parallèle à l'axe longitudinal (L) respectif des tubes (14, 16), et le tronçon de l'une des saillies de maintien (26, 28) s'étendant selon une direction axiale opposée par rapport au tronçon (36) de l'autre saillie de maintien (26, 28), et **en ce que** les extrémités de tube (18, 20) sont en appui sur les saillies de maintien (26, 28) associées à celles-ci.

2. Silencieux selon l'une des revendications précédentes, **caractérisé en ce que** les extrémités de tube (18, 20) sont reliées de manière rigide aux saillies (26, 28) associées à celles-ci.

3. Silencieux selon l'une des revendications précédentes, **caractérisé en ce que** le fond intermédiaire (22) est relié de manière solidaire au boîtier (12).

4. Silencieux selon l'une des revendications précédentes, **caractérisé en ce que** dans la zone du fond intermédiaire (22), les extrémités de tube (18, 20) sont engagées l'une dans l'autre de manière à être déplaçables axialement l'une par rapport à l'autre.

5. Silencieux selon l'une des revendications précédentes, **caractérisé en ce que** les saillies (26, 28) sont réalisées sous forme de languettes repliées.

6. Silencieux selon l'une des revendications précédentes, **caractérisé en ce que** le fond intermédiaire (22) est réalisé sous forme de pièce de tôle estampée.

7. Silencieux selon l'une des revendications précédentes, **caractérisé en ce que** les saillies (26) sont agencées régulièrement le long de la périphérie des extrémités de tube (18, 20).

8. Silencieux selon l'une des revendications précédentes, **caractérisé en ce que** le fond intermédiaire (22) est annulaire.

9. Silencieux selon l'une des revendications 1 à 7, **caractérisé en ce qu'**il est prévu au moins deux tubes d'admission (14) et des tubes de sortie (16) associés à ceux-ci, dont les extrémités de tube (18, 20) sont maintenues par un fond intermédiaire commun (22).

10. Silencieux selon la revendication 9, **caractérisé en ce que** le fond intermédiaire (22) présente au moins deux évidements (32) sensiblement circulaires, plusieurs saillies de maintien (26, 28) étant respectivement prévues le long de la périphérie des évidements.
